# EUROPEAN PATENT APPLICATION

(11) **EP 4 095 098 A1**
(43) Date of publication of application: **30.11.2022**
(21) Application number: 21213274.0
(22) Date of filing: 08.12.2021
(51) Int. Cl.: C01B 33/18, D06P 1/00, D06P 1/44

(54) **SIO2 UV SENSORY PARTICLES, A PROCESS FOR PREPARATION THEREOF AND TEXTILE FIBRES COMPRISING SAID PARTICLES**

(71) Applicant: IOS, Institut za okoljevarstvo in senzorje, d.o.o., 2000 Maribor (SI)
(72) Inventor: Kosak, Aljosa, 3000 Celje (SI); Lakic, Marijana, 3325 Sostanj (SI); Gutmaher, Andreja, 2000 Maribor (SI); Lobnik, Aleksandra, 2311 Hoce (SI)
(74) Representative: Patentni Biro AF d.o.o.

(57) **Abstract**

The present invention relates to the field of pigments and pigments, more particularly to the field of particles with immobilized UV-responsive pigments and to the field of processes for the preparation of said particles. The essence of the invention is in the preparation of mesoporous reversible UV-responsive SiO₂ nanoparticles, which due to their specific surface area and porosity will allow the immobilization of large amounts (up to 30 wt.%) of a spiropyran pigment. The process for preparation of SiO₂ UV sensory particles, wherein the process is based on a sol-gel method, i.e. hydrolysis and polycondensation of tetraethoxysilane (TEOS) and/or phenyltrimethoxysilane (PhTriMOS) in the presence of a pigment selected in the family of spiropyrans, preferably 1,3,3-Trimethylindolino-6'-nitrobenzopyrylospyran.

## Description

### Field of the Invention

The present invention belongs to the field of pigments, more particularly to the field of particles with integrated UV-responsive pigments and to the field of processes for the preparation of said particles. The invention relates to SiO₂ UV sensory particles with immobilized photochromic pigment from the group of spiropyrans, a process for preparation thereof and textile fibres comprising said UV-sensory particles.

### Technical problem

Photochromism is a reversible transformation of a chemical species between two forms by the absorption of electromagnetic radiation (photoisomerization), where the two forms have different absorption spectra. The transformation is induced by electromagnetic radiation such as UV or NIR light and involves different reactions such as cis-trans isomerization, electrocyclic reactions, cycloaddition reactions, tautomerisation, dissociation processes, etc. Photochromic pigments are powders designed to change colour after exposure to a UV light source, wherein they may also react to direct sunlight. Such pigments are white or colourless, but turn to coloured (i.e. red, pink, violet, blue, green, orange, yellow, etc.) upon UV exposure. The process is reversible, so that the pigments return to white or colourless after being away from UV light. The reverse reaction can occur predominantly by a thermal or a photochemical mechanism. Various photochromic pigments are known, such as spiropyrans, spirooxazines, chromenes (benzopyrans and naphthopyrans), fulgides and fulgimides, arylethenes, and spirodihydro indolizines.

Most common uses of photochromic pigments include:
- colour changing lenses for sunglasses,
- supramolecular chemistry, i.e., creation of molecular switches,
- toys,
- packaging,
- cosmetics, for example protective coatings and creams,
- clothing, for example smart textiles for protection, security or UV protection,
- data storage,
- solar energy storage, and
- various industrial applications, such as ophthalmology, printing, manufacturing of pigments and similar coatings, as well as manufacturing of opto-sensory assemblies and devices.

The choice of the photochromic pigment depends on the type of application/use. Upon selecting the photochromic pigment, a suitable carrier medium has to be carefully chosen, as it may strongly influence or control:
- the kinetics of the reverse reaction when it occurs,
- the colour of the species formed in the forward photochemical reaction,
- the activation time, in which 80% of the final colour change is achieved,
- the fade time (i.e. bleaching) needed for discolouration to 50% of the final colour change, and
- other properties of the photochromic process.

The process of immobilization or integration of photochromic organic pigments may be performed in various ways, so that the pigment is located in the interior of particles, in the mesoporous particle structure or on the particle surface via binding molecules. The techniques may be mechanic, physical-chemical, and chemical with polymerisation or condensation processes. The selected process has to fulfil the following conditions:
- the photochromic organic pigment may not be soluble in the carrier medium,
- the said pigment has to disperse in the carrier medium,
- the said pigment has to be inert in a way that its own structure is not change,
- the said pigment has to withstand changes in the pH values, temperatures and concentration of compounds used in the process.

Spiropyrans, especially indolinospiropyrans, are the most studied of all photochromic families and represent the basis of the present invention. Reversible photochromic reaction is attributed to equilibrium between the spiropyran ("closed," "colourless") form and a merocyanine ("open," "coloured") form. The merocyanine itself is an equilibrium mixture of geometrical conformations, and its electronic distribution varies from highly zwitterionic to an essentially non-ionic ortho-quinoidal structure. Since their discovery, photochromic spiropyrans have been widely used and incorporated into various materials i.e., surface bound monolayers, Langmuir monolayers, Langmuir Blodgett films, polymeric brushes, photo-controllable surfactants, liquid crystalline materials, polymeric matrices, organic/inorganic hybrid systems, colloidal particles, ionic liquids and initiators for radical polymerisations, as reviewed by Florea et al (2012, doi: 10.1002/mame.201200306).

Although spiropyran systems have been shown to have several advantages for a wide variety of applications, they suffer from issues like photofatigue, insufficient selectivity and lack of sensitivity. Several reports show that by immobilising the spiropyran moiety in a polymer matrix, photofatigue, which is often encountered due to the formation of aggregates between individual merocyanine moieties, can be dramatically improved. By covalently or non-covalently entrapping the spiropyran unit, its degree of motion is reduced and therefore the possibility of interaction between MC molecules formed upon irradiation with UV light is reduced, having beneficial effects on decreasing the photo-fatigue.

Most research to date is based on the immobilization of photochromic pigments, mostly spiropyrans, into polymer matrices such as polymethylacrylate (PMA), polymethylmethacrylate (PMMA), polyurethane (PU), polystyrene (PS), cellulose derivatives (MC, EC, CA), melamine-formal resins (MF), which also have many disadvantages affecting the kinetics and (back-)switching photochromic reaction associated with rigid polymer structure, their mechanically and thermic stability, chemical resistance, hardness, swelling, elasticity, relatively high glass transition temperature, brittleness at room temperature, rheological properties (viscosity), low internal specific surface area and porosity, pigment leaching, biological incompatibility, MC aggregation, photo-degradation, switching speed between the cleared and coloured states, etc. Such solutions are described by Ivashenko et al. (2013, doi 10.1021/Ia400192c), as well as patent applications KR20170014594 and US6017389.

The technical problem, which is solved by the present invention, is thus development of UV sensory particles that will overcome the described disadvantages. The main aim of the present invention is providing reliable and improved UV sensors with a fast colour change and slow fading upon removal of UV radiation, which are suitable for use in textiles in order to prevent unwanted or excessive UV exposure.

Reduction of the atmospheric ozone causes increased UV radiation, which is invisible and does not immediately cause any problems. However, its effects may lead to degenerative changes in skin, tissue and blood cells, thus leading to skin ageing, photodermatitis, keratosis, eye inflammation, cataract as well as skin cancer. Each year 2 to 3 million of non-melanoma skin cancers are diagnosed, while approximately 130000 of malignant melanomas are discovered. Many skin conditions could be prevented by reduced exposure to sun; hence, there is an urgent need to develop UV sensors that could be integrated in various objects, especially clothes, so that upon seeing a colour change people could avoid excessive UV exposure.

### State of the art

Anderson et al (2005; doi: 10.1039/b505319f) have incorporated the photochromic pigments spiropyran and spirooxazine in surfactant templated mesostructured silica particles. The particles were prepared in a spray-drying reactor from an inorganic siliceous precursor solution, which contained the inorganic precursors, amphiphilic molecules and the photochromic pigment. Said solution was sprayed together with a carrier gas through a two-flow spray-nozzle into an evaporation chamber at room temperature where the volatile components were evaporated, and the internal liquid crystalline mesostructure was formed by the cooperative self-assembly of the amphiphilic molecules, silicic acid and the pigments. After that aerosol particles were then transported through a heating stage of the reactor at 200 ºC until finally obtained mesostructured silica pigments were collected on a Teflon tube filter. This differs significantly from the present invention. Further, this process has a disadvantage that the pigment may be degraded due to high temperatures. Moreover, the process leads to fairly large particles in the range of 3 to 5 µm, which is too large to be incorporated in textile fibres.

Pinto et al. (2016, doi: 10.1021/acsami.5b11983) describe preparation of hybrid nanomaterials based on the covalent grafting of silylated naphthopyrans (NPTs) onto silica nanoparticles (SiO₂ NPs). The preparation process consisted of the following steps:
a) NPTs (derivatives from 2H-naphtho[1,2-b]pyran (2H-NPT) and 3H-naphtho[2,1-b]pyran (3H-NPT)) silylation by a microwave-assisted reaction between hydroxyl-substituted NPTs and 3-(triethoxysilyl)propyl isocyanate, followed by
b) covalent post-grafting onto SiO₂ NPs.

The SiO₂ NPs functionalized with silylated 2H-NPT and 3H-NPTs showed fast coloration/decolouration kinetics and high values of total colour difference. Furthermore, the silylated-based nanomaterials showed good photo stability upon prolonged UV light exposure, keeping their photochromic performance unchanged for at least 12 successive UV/dark cycles. However, this process only allows preparation of covalently attached pigments on the outer surface of nanoparticles, which may lead to deterioration due to external conditions. This solution differs from the present invention in the choice of photochromic pigment and in the preparation process.

### Description of the solution of the technical problem

The essence of the present invention is development of a one-step process for preparation of SiO₂ UV sensory nanoparticles. The solution of the technical problem is a process that is based on a sol-gel method, i.e., hydrolysis and polycondensation of tetraethoxysilane (TEOS) and phenyltrimethoxysilane (PhTriMOS) in the presence of a pigment selected in the family of spiropyrans, preferably in the presence of 1,3,3-Trimethylindolino-6'-nitrobenzopyrylospyran. The resulting SiO₂ mesoporous nanoparticles with immobilized spiropyrans in the interior of said nanoparticles exhibit photochromic responsiveness upon exposure to UV light.

More precisely, the process for preparation of said nanoparticles comprises the following steps:
a) addition of a spiropyran pigment, preferably 1,3,3-Trimethylindolino-6'-nitrobenzopyrylospyran, in the weight concentration range of 13 wt.% to 28 wt.% to a reaction mixture for hydrolysis and polycondensation of:
   - tetraethoxysilane (TEOS), or
   - phenyltrimethoxysilane (PhTriMOS), or
   - the mixture of TEOS in a range of 0 wt.% to 7 wt.%, and PhTriMOS in a range of 0 wt.% to 7 wt.%,
      wherein the hydrolysis and polycondensation are carried out:
   - in an alcoholic medium that consists of at least one alcohol selected in the group consisting of methanol, ethanol, propanol or butanol, preferably ethanol, or a mixture of alcohols selected in the group of methanol, ethanol, propanol or butanol, in a concentration range 29 wt.% to 61 wt.%, and
   - in the presence of:
      ∘ an alkaline catalyst ammonia in a concentration range of 2 wt.% to 5 wt.%,
      ∘ optionally water in a concentration range 0 wt.% to 52 wt.%,
   - and the process parameters are:
      ∘ temperature in the range from 25 °C to 40 °C,
      ∘ reaction time at least one hour, preferably in the range of 1h - 24h, usually 1 to 3 hours,
      ∘ continuous stirring during the whole reaction process, preferably using a magnetic stirrer at a stirring rate of 300 rpm,
      ∘ pH value of the reaction mixture in the range of 10.0 to 11.0,
      ∘ a molar ratio (R) of water:(TEOS+PhTriMOS) in the range R (n[H2O] : n[TEOS+PhTriMOS]) 24 - 200, preferably 24, 40, 80, 100, 120 and 200, and
      ∘ a molar ratio (P) of TEOS:PhTriMOS is in the range P (n[TEOS] : n[PhTriMOS]) = 1:0; 1:2; 1:3; 1:4; 1:5; 1:1; 5:1; 4:1; 3:1; 2:1; 0:1 or any suitable ratio in between 1:5 to 5:1.
b) Centrifugation of the reaction mixture prepared in step a) in order to obtain nanoparticles with immobilized spiropyran pigment, preferably at 4500 rpm for 5 minutes,
c) Rinsing the nanoparticles obtained in step b) with a mixture of ethanol and distilled water, preferably 1:1 (V/V), and centrifugation to remove the ethanol and water mixture,
d) Drying the rinsed nanoparticles in step c) at a temperature of at least 20 °C up to 90 °C, to obtain dried SiO₂ nanoparticles with the immobilized spiropyran, preferably1,3,3-Trimethylindolino-6'-nitrobenzopyrylospyran in a powder form, wherein the preferred drying temperature is in the range of 30 to 50 °C, most preferably 35 ºC. Drying can be performed for a time period from 6 to 48 hours, usually from 8 to 24 hours.

All w/w % are weight of the added compounds with regards to the total weight of the reaction.

The process according to the invention results in functionalized mesoporous silica (SiO₂) nanoparticles with immobilized spiropyran in its structure. The average particle size is in the range from 500 nm to 5 µm. In contrast to a polymer matrix, the nanoparticles according to the invention have high surface area and pore volume, thermal stability, insolubility in solvents, possibility of anchoring of the high density of active species, as well as the relatively high stretching ability, high mechanical strength, optical transparency, high functional group tolerance, and biocompatibility. The high internal surface area and the large pore volume has the potential to accommodate larger amounts of spiropyran pigment dispersed well enough to allow the colouring-discolouring (i.e. (back-)switching) reaction to proceed.

The kinetics of the (back-)switching reaction of a photochromic spiropyran pigment immobilized in mesoporous silica (SiO₂) materials is significantly influenced both by the space available to the spiropyran pigment molecules and by the functionalization of the silica (SiO₂) pore walls. Steric hindrance of the ring-closing process due to high spiropyran pigment content or small pore size leads to a slow fading of the irradiated particles. In the test performed of prepared nanoparticles, fading lasted approximately 5 seconds after removal of UV irradiation. If a smaller amount of spiropyran pigment is immobilized, the different pigment molecules will be further apart from each other, reducing the hindrance of the ring-closing process and therefore speeding up the colouring-discolouring (i.e., the switching) process.

Further, the density of surface silanol-groups (Si-OH) present at the silica (SiO₂) walls has an effect on the switching behaviour of the spiropyran pigment because of their ability to stabilize the zwitterionic merocyanine (MC) isomers, thereby slowing the fading process from the open to the closed form. The presence of alkaline functional groups (e.g., amino- or phenyl-groups, etc.) linked to the pore walls of the silica (SiO₂) particles, reduce the stabilization of the open-from pigment MC isomers, and thus speed up the switching process, while this stabilization effect is further enhanced in the presence of acidic functional groups (e.g., thiol- or sulfonic- acid groups).

The nanoparticles according to the invention are prepared with a simple and environmentally friendly method (there is no use of toxic chemicals), which allows controlled particle size, shape and chemical composition. The method has low costs and high safety. As the pigment is incorporated in the structure of the nanoparticles, the pigment is protected against external conditions such as high temperature, presence of chemicals, etc., which ensures reliable response to the UV radiation regardless of the treatment of nanoparticles or their incorporation into various products, including textile fibres.

The nanoparticles as prepared above can be incorporated into any textile fibre, preferably into cotton, polyester, cellulose fibres, and especially polyamide (PA) fibres. Such fibres can be prepared with any suitable method known to the skilled person, wherein multicomponent synthesis technology is also possible for manufacturing fibres doped with nanoparticles prepared as described above. The so prepared fibres are consequently sensitive to UV light and indicate UV exposure. Further, the pigments in the fibres absorb UV irradiation, thus protecting the skin from detrimental effects. Clothes at least partly made with said fibres can be any clothing, such as sports clothing, outdoor clothing, shirts, pullovers, sweaters, jackets, hats and similar.

The invention will be described in more detail base on possible embodiments and figures, which show:
- Figure 1: FTIR spectra of silica particles with 1,3,3-Trimethylindolino-6'-nitrobenzopyrylospyran at different TEOS-to-PhTriMOS molar ratios: a) 100% TEOS, b) 100% PhTriMOS, c) 1:2 TEOS:PhTriMOS and d) 2:1 TEOS:PhTriMOS
- Figure 2: SEM of samples with various precursor ratios: a) TEOS:PhTriMOS 1:0 R40, b) TEOS:PhTriMOS 0:1 R40, c) TEOS:PhTriMOS 2:1 R40, d) TEOS:PhTriMOS 1:2 R40, e) TEOS:PhTriMOS 1:0 R120, f) TEOS:PhTriMOS 0:1 R120,
- Figure 3: UV-VIS spectroscopy of representative pigment extracted from prepared silica particles dissolved in ethanol prior and after UV exposure
- Figure 4: The UV response of the prepared silica particles 1,3,3-Trimethylindolino-6'-nitrobenzopyrylospyran

Although it is possible to use the above-described preparation method for all spiropyrans, the preferred embodiment of the photochromic pigment is 1,3,3-Trimethylindolino-6'-nitrobenzopyrylospyran, which shows the highest stability and the highest colour change response.

The general procedure is as follows; wherein specific examples are given in the table 1 below. In a reaction vessel equipped with a magnetic stirrer and reflux, a suitable amount of absolute ethanol is poured, to which a suitable amount of TEOS and PhTriMOS is added to achieve the desired mass ratio R and molar ratio P. The pH of the reaction mixture is then increased by addition of a suitable amount of ammonium hydroxide in the form of a 25% aqueous NH₄OH solution, and then a suitable amount of the photochromic pigment 1,3,3-Trimethylindolino-6'-Nitrobenzopyrylospyran is added. Water is added in a suitable amount. Moderate stirring is set to 300 rpm at room temperature and the reaction is carried out for 24 h. During the reaction, a white precipitate is formed consisting of mesoporous spherical particles of inorganic silicon (IV) oxide with immobilized the photochromic pigment. The contents of the reaction vessel are then centrifuged for 5 minutes at 4500 rpm to separate the sediment from the remaining reaction liquid phase. The supernatant is discarded and the white sediment is washed several times with ethanol: water (50% v/v) and finally with distilled water, and dried at 35 ºC for 24 hours.

**Table 1: Examples with concentrations of particular reagents**

| Ex. no. | Sample | EtOH (wt%) | TEOS (wt%) | R | PhTriMOS (wt%) | P | NH₄OH (wt%) | Pigment (wt%) | H₂O (wt%) |
|---|---|---|---|---|---|---|---|---|---|
| 1 | A | 60.70 | 2.29 | 24 | 4.27 | 1:2 | 4.74 | 28.00 | 0.00 |
| 2 | B | 55.33 | 6.17 | 40 | 0.00 | 1:0 | 4.32 | 25.52 | 8.66 |
| 3 | C | 55.55 | 0.00 | 40 | 5.81 | 0:1 | 4.34 | 25.62 | 8.69 |
| 4 | D | 55.39 | 4.18 | 40 | 1.89 | 2:1 | 4.32 | 25.54 | 8.67 |
| 5 | E | 55.44 | 2.09 | 40 | 3.90 | 1:2 | 4.33 | 25.57 | 8.68 |
| 6 | F | 38.64 | 4.31 | 120 | 0.00 | 1:0 | 3.02 | 17.82 | 36.21 |
| 7 | G | 38.75 | 0.00 | 120 | 4.05 | 0:1 | 3.02 | 17.87 | 36.31 |
| 8 | H | 38.67 | 2.92 | 120 | 1.32 | 2:1 | 3.02 | 17.83 | 36.24 |
| 9 | I | 45.62 | 1.72 | 80 | 3.21 | 1:2 | 3.56 | 21.04 | 24.86 |
| 10 | J | 41.85 | 1.58 | 100 | 2.94 | 1:2 | 3.27 | 19.30 | 31.05 |
| 11 | K | 38.69 | 1.46 | 120 | 2.72 | 1:2 | 3.02 | 17.84 | 36.26 |
| 12 | L | 29.72 | 1.12 | 200 | 2.09 | 1:2 | 2.32 | 13.71 | 51.05 |

The prepared nanoparticles according to the embodiments described above were characterized by scanning electron microscopy (SEM), Fourier infrared spectroscopy (FT-IR), specific surface area and porosimetry measurements (BET), UV-VIS spectroscopy of the pigment prior and after UV exposure and visual determination of colour change under the influence of UV light.

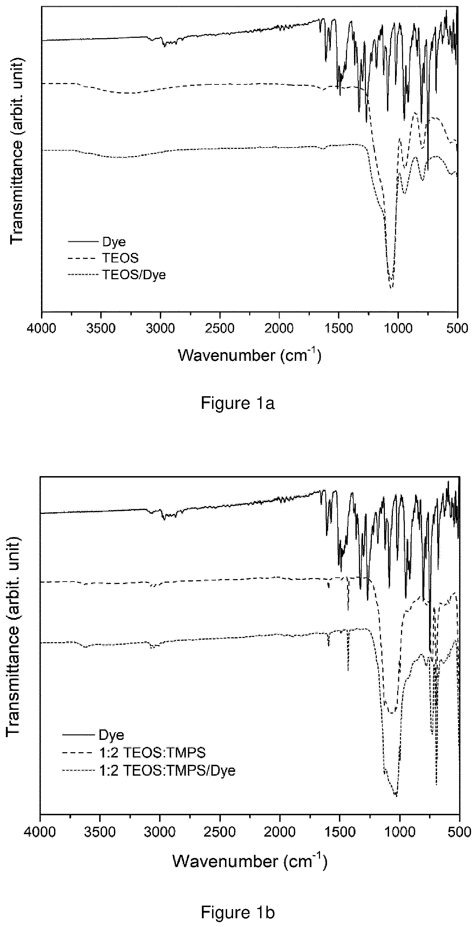

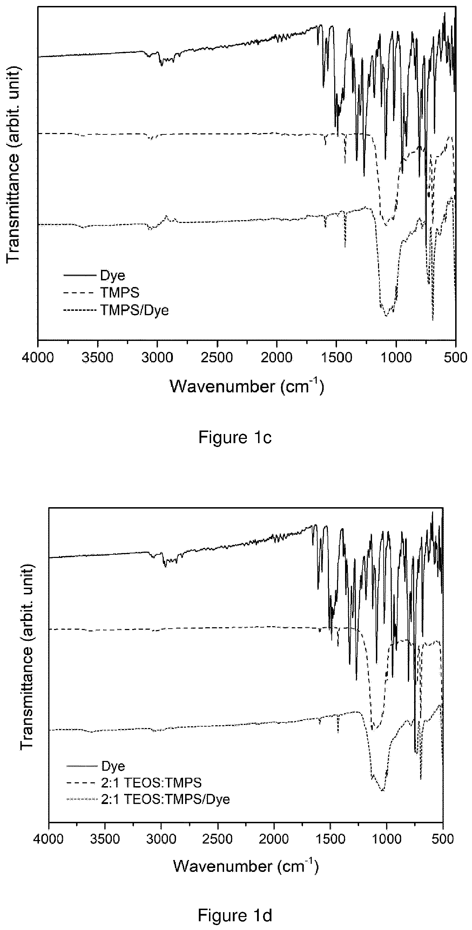

FTIR analysis was used for identification of organic pigment molecules on the surface or of prepared the silica particles utilising infrared light for scanning the samples. Figure 1 shows FTIR spectra of silica particles with immobilized photochromic 1,3,3-Trimethylindolino-6'-nitrobenzopyrylospyran pigment at different TEOS-to-PhTriMOS molar ratios: a) 100% TEOS, b) 100% PhTriMOS, c) 1:2 TEOS:PhTriMOS and d) 2:1 TEOS:PhTriMOS. Absence of peaks of free pigment suggests that the pigment is entirely immobilized in the structure of the nanoparticles and is not present on the surface of the said nanoparticles. This means that the pigment is in the interior of the nanoparticles and is thus protected against external conditions such as high temperature and presence of chemicals that could affect its structure, amount or responsiveness to UV radiation.

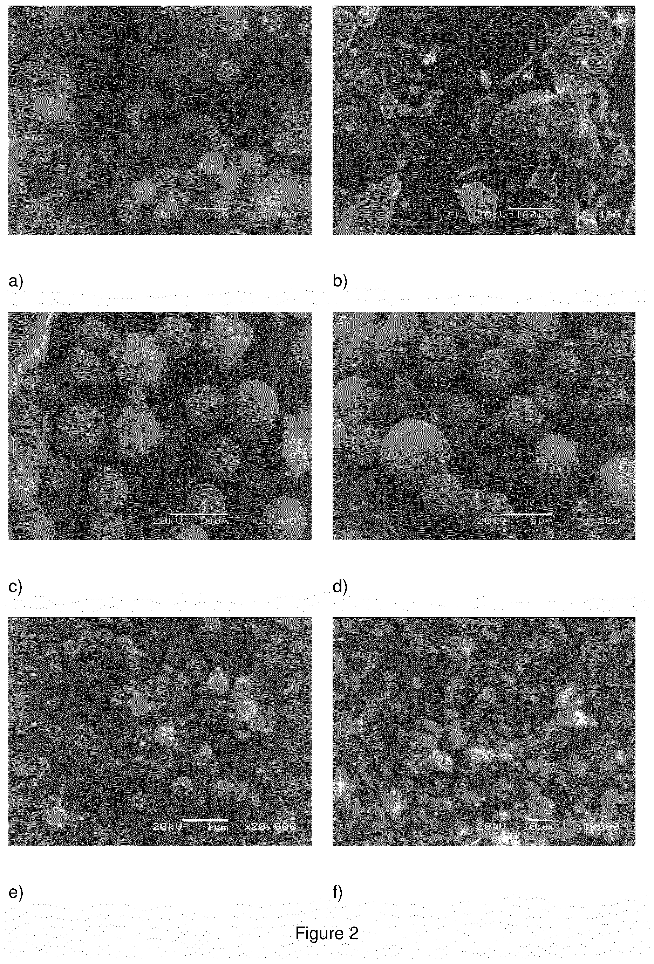

Figure 2 shows SEM images of the samples prepared at different precursors molar ratios: a) sample B, b) sample C, c) sample D, d) sample E, e) sample F, f) sample G. The prepared SiO₂ particles are spherical in shape, wherein those prepared without TEOS have irregular shapes. Spherically shaped particles are preferred due to easier incorporation into fibres. The average spherical particle size was in the range between 500 nm and 5 µm, the average specific surface area is 32 m²/g and with an average pore volume of 0.74 cm³ and a pore size of 6.5 nm.

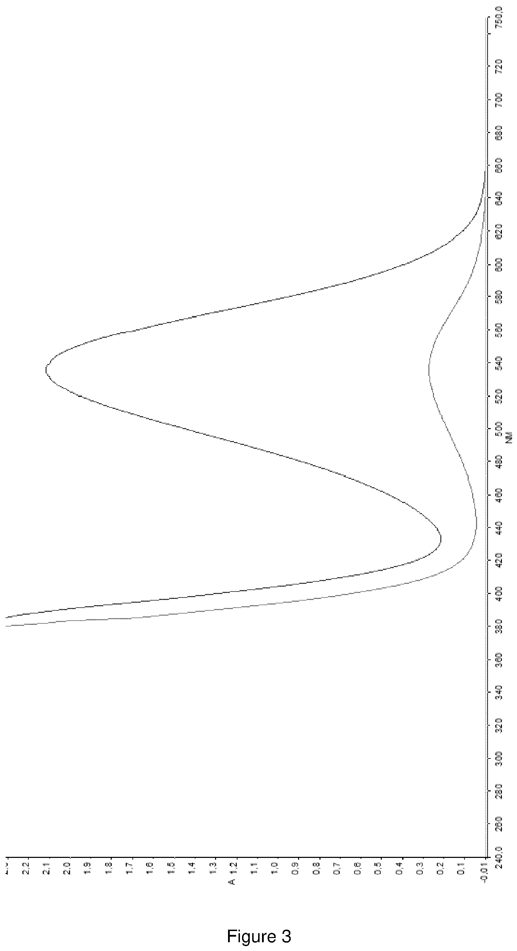

Figure 3 shows a spectre obtained with UV-VIS spectroscopy of a representative pigment extracted from prepared silica particles prior and after UV exposure. The higher absorbance at the same peaks around 340 and 540 nm upon UV exposure confirms the visual colour change that was observed for the majority of prepared nanoparticles according to the invention.

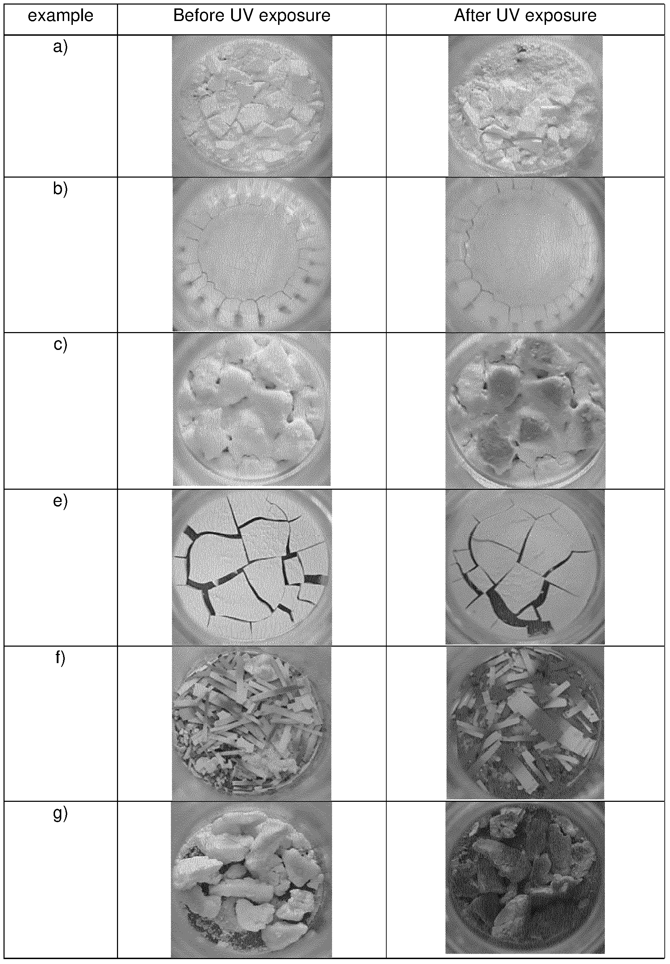

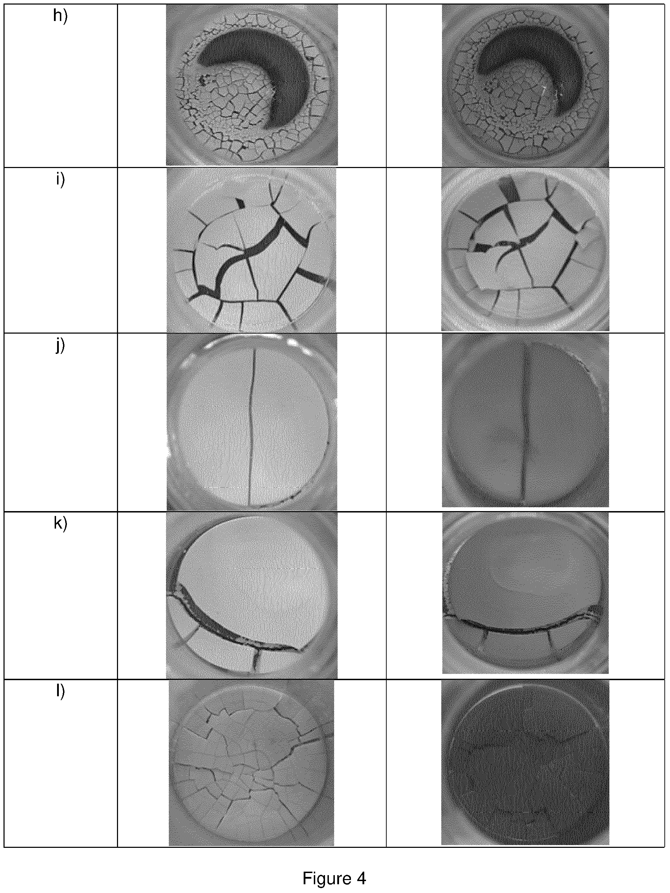

Namely, the prepared nanoparticles respond to incident UV electromagnetic waves with a photochromic reaction or reversible colour change as shown in figure 4. UV irradiation was carried out in a UV-light chamber at 365 nm and lasted for at least a second and up to 5 seconds, wherein the colour change has been observed immediately upon exposure. This is due to a change in conformation and electronic distribution in the pigment structure, with the immobilized pigment used optically changing slightly to dark pink after UV exposure. The largest change in colour after UV excitation had samples prepared at higher content of PhTriMOS precursor (TEOS/PhTriMOS ratio 1:2), due to the presence of a large number of alkaline Ph-groups in the internal mesoporous structure of SiO₂ particles, and a lower content of immobilized pigment 1.3, 3-Trimethylindolino-6'-nitrobenzopyrylospyran as a result of lack of steric barriers inside the mesoporous structure. Samples prepared according to examples C, E, F, G, H, I, J, K, L, and especially E, I, J and K proved to be the most optimal. In all samples the change of colour lasted for approximately 9 seconds, whereas it faded in approximately 5 seconds upon removal of the sample from the UV chamber.

## Claims

1. A process for preparation of SiO₂ UV sensory particles, wherein the process is based on a sol-gel method, i.e., hydrolysis and polycondensation of tetraethoxysilane (TEOS) and/or phenyltrimethoxysilane (PhTriMOS) in the presence of a pigment selected in the family of spiropyrans.

2. The process according to claim 1, wherein the pigment is 1,3,3-Trimethylindolino-6'-nitrobenzopyrylospyran.

3. The process according to claim 1 or 2, wherein it comprises the following steps:
a) addition of the spiropyran pigment, preferably 1,3,3-Trimethylindolino-6'-nitrobenzopyrylospyran, in the weight concentration range of 13 wt.% to 28 wt.% to a reaction mixture for hydrolysis and polycondensation of:
- tetraethoxysilane (TEOS), or
- phenyltrimethoxysilane (PhTriMOS), or
- a mixture of 0 wt.% to 7 wt.% TEOS and 0 wt.% to 7 wt.% PhTriMOS, wherein the hydrolysis and polycondensation are carried out:
- in an alcoholic medium that consists of at least one alcohol selected in the group consisting of methanol, ethanol, propanol or butanol, preferably ethanol, or a mixture of alcohols selected in the group of methanol, ethanol, propanol or butanol, in a concentration range 29 wt.% to 61 wt.%, and
- in the presence of:
∘ an alkaline catalyst ammonia in a concentration range of 2 wt.% to 5 wt.%,
∘ optionally water in a concentration range 0 wt.% to 52 wt.%,
- and the process parameters are:
∘ temperature in the range from 25 °C to 40 °C,
∘ reaction time for at least 1 hour, preferably in the range of 1h - 24h, usually 1 to 3 hours,
∘ continuous stirring during the whole reaction, preferably using a magnetic stirrer at a stirring rate of 300 rpm,
∘ pH value of the reaction mixture in the range of 10.0 to 11.0,
∘ a molar ratio (R) of water:(TEOS+PhTriMOS) in the range R (n[H₂O] : n[TEOS+PhTriMOS]) 24 - 200, preferentially 24, 40, 80, 100, 120 and 200, and
∘ a molar ratio (P) of TEOS:PhTriMOS is in the range P (n[TEOS] : n[PhTriMOS]) = 1:0; 0:1, or any ratio between 1:5 to 5:1, preferably 1:2; 1:3; 1:4; 1:5; 1:1; 5:1; 4:1; 3:1; 2:1;
b) centrifugation of the reaction mixture prepared in step a) in order to obtain nanoparticles with immobilized photochromic pigment, preferably at 4500 rpm for 5 minutes,
c) rinsing the nanoparticles obtained in step b) with a mixture of ethanol and distilled water, preferably 1:1 (V/V), and centrifugation to remove the ethanol and water mixture,
d) drying the rinsed nanoparticles in step c) at a temperature from 20 °C up to 90 °C to obtain dried SiO₂ nanoparticles with the immobilized spiropyran, preferably 1,3,3-Trimethylindolino-6'-nitrobenzopyrylospyran, in a powder form, preferably the drying temperature is 30 to 50 °C, most preferably 35 ºC.

4. The process according to any of the preceding claims, wherein the specific amounts and ratios of reagents are:
| EtOH (wt%) | TEOS (wt%) | R | PhTriMOS (wt%) | P | NH₄OH (wt%) | Pigment (wt%) | H₂O (wt%) | |
|---|---|---|---|---|---|---|---|---|
| 55.44 | 2.09 | 40 | 3.90 | 1:2 | 4.33 | 25.57 | 8.68 | or |
| 45.62 | 1.72 | 80 | 3.21 | 1:2 | 3.56 | 21.04 | 24.86 | or |
| 41.85 | 1.58 | 100 | 2.94 | 1:2 | 3.27 | 19.30 | 31.05 | or |
| 38.69 | 1.46 | 120 | 2.72 | 1:2 | 3.02 | 17.84 | 36.26 | |

5. SiO₂ UV sensory particles prepared by the method according to any of the preceding claims.

6. Textile fibres comprising SiO₂ UV sensory particles according to the preceding claim.

7. Textile fibres according to the preceding claims, wherein the fibres are polyamide fibres.

8. A clothing article at least partly made of textile fibres according to claim 6 or 7.

9. The clothing article according to the preceding claim, wherein the clothing is sports clothing, outdoor clothing, shirts, pullovers, sweaters, jackets, hats and similar.
